# EUROPEAN PATENT APPLICATION

(11) **EP 1 186 984 A2**
(43) Date of publication of application: **13.03.2002**
(21) Application number: 01121622.3
(22) Date of filing: 11.09.2001
(51) Int. Cl.: G06F 1/00

(54) **Authentication system capable of maintaining security and saving expenses**

(30) Priority: 11.09.2000 JP 2000274421
(71) Applicant: NEC CORPORATION, Tokyo (JP)
(72) Inventor: Suwamoto, Tuyosi, Minato-ku, Tokyo (JP); Satoh, Hirokazu, Minato-ku, Tokyo (JP); Tanabe, Taisuke, Minato-ku, Tokyo (JP); Oosawa, Kazuaki, Minato-ku, Tokyo (JP); Numasaki, Takeshi, Minato-ku, Tokyo (JP)
(74) Representative: VOSSIUS & PARTNER

(57) **Abstract**

The communications terminal 1 has the individual ID 2 added in the process of manufacturing and the authentication server 3 connected to the communications terminal 1 via the communications network 6 registers personal information 4. Upon receiving a connection request from the communications terminal 1, the authentication server 3 requires the communication terminal 1 for transmission of ID 2. The authentication server 3 performs authentication of ID2 transmitted from the communications terminal by determining if there is a match and provides services available when the ID 2 is authenticated.

## Description

The present invention relates to an authentication system, and more particularly to an authentication system for preventing leakage of a user's information when the user performs electronic shopping and the like via a communications circuit (network) using a communications terminal.

Conventionally, a system in which a user sends notifications including a credit card number or personal information (address, name, bank account number and the like) from a communications terminal to a host computer connected to a network at every purchase of merchandise is adopted in the electronic shopping using a communications terminal.

And in LAN (Local Area Network) and the like, an authentication for determining whether the user is a right person to make an access or not is performed by setting an identifier such as IDs (Identification) or passwords and the like. In the case above, precluding unauthorized accesses made by a third party outside is essential for preventing information from being leaked outside. A proposal is made about countermeasures against the unauthorized access in, for example, JP-A-2000-10927.

In a system described in JP-A-2000-10927, a user's "PHS number", "password for an authentication device" and "remote connection ID" are registered in an authentication device in advance. And the authentication device certifies the "user's PHS number" and the "password for the authentication device" in response to a line connection from the user by inputting "telephone number + password for the authentication device". When there is a match, the authentication device sends messages to the user that a temporary password is issued with respect to the user's PHS terminal and that the user needs to wait having communications of his or her PHS terminal off for a time. Then the authentication device issues a temporary password with respect to the user and notifies the user of the issuance by indicating a character message on the user's PHS terminal. The user can receive network services by connecting a personal computer (PC) to a remote connecting device using the temporary password.

However, according to the conventional system, in the event that the authentication of a user is performed by inputting user's credit card number or personal information, a third person may be authenticated under a fictitious credit card number and personal information and security problems can be caused. And the user has to be bothered by information inputting operations.

Further, according to JP-A-2000-10927, the user has to have a PHS terminal for obtaining the temporary password and is required to input the temporary password, which bothers the user.

It is therefore an object of the present invention to provide an authentication system capable of reducing costs for security measures maintaining security without bothering users.

To solve the above-mentioned problems, the present invention provides an authentication system for determining the authenticity of a user on the occasion of providing said user with desirable services via a terminal connected to a communications circuit or a network, characterized in connecting an authentication server in which personal information for authentication are registered to the above-mentioned communications circuit -or the above-mentioned network, sending a request for transmitting an individual ID added to the above-mentioned terminal from the above-mentioned authentication server in response to a connecting request from the above-mentioned terminal, and performing authentication according to pass/fail result of verifying the above-mentioned received ID.

According to the system, database is formed by individual IDs added to each terminal and personal information on the server side in advance and authentication is performed based on a verification result of an ID sent from the terminal upon request from the server side when a user makes an access from the terminal. Therefore, inputting operation for authentication by the user becomes unnecessary, which can avoid personal information to be revealed by the third party (can ensure security). And as the inputting operation is no longer required, users are not bothered. Further, as there is no need to issue the temporary passwords, reduction of costs for security measures becomes possible.
Fig. 1 is a block diagram for showing an authentication system of the present invention,
Fig. 2 is a block diagram for showing an embodiment of the authentication system according to the present invention,
Fig. 3 is a timing chart for showing an operation of the system shown in Fig. 2; and
Fig. 4 is a flowchart for showing processes in a shopping agent and an authentication server.

Hereinafter, preferred embodiments of the present invention are described more particularly based on the drawings.

### A first preferred embodiment

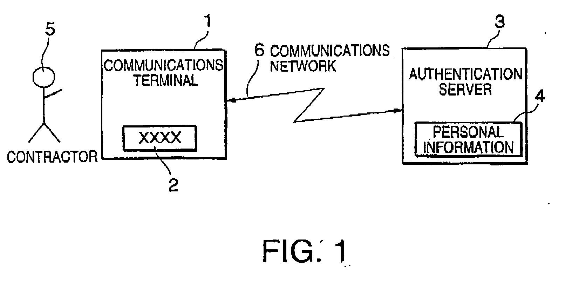

Fig. 1 illustrates an authentication system of the present invention.

A communications terminal 1 in which an individual ID 2 for each terminal is set is connected to an authentication server 3 via a communications network 6. In the authentication server 3, the ID 2 is registered in advance and personal information 4 associated with the ID 2 is stored further.

The ID 2 is an individual number consisting of a plural digit of numbers or a combination of numbers and alphabets and the like added in manufacturing process by a manufacturer (different from a product serial number) and disables administrators and the like for reset or change. And the ID 2 is fixed and can not be reused by other communications terminals using the identical contents. Therefore, an ID offering a superior level of identification and safety can be obtained. The ID 2 is readout by an inputting device specially provided on the side of an administrator and stored in the authentication device 3 together with the personal information 4 in the event of, for example, joining electronic shopping.

Address, name, bank account number, credit information and the like are used as the personal information 4. A contractor 5 of a communication service performed by using the communications terminal 1 is identified by the personal information 4. As the ID 2 and the personal information 4 are corresponding to each other, the personal information 4 can be retrieved from ID 2.

A communications terminal providing a function of JAVA Virtual Machine is used as a communications terminal 1. JAVA Virtual Machine is a machine constructed by using JAVA which is a programming language developed by Sun Microsystems Cooperation in the United States and operates on OS (Operating System) such as Windows, Unix and the like. A portable phone, a simplified portable phone (PHS: Personal Handy-phone System), PDA (Personal Digital Assistant) device providing communication facility, a set top box (STB) and the like are applicable as the above-mentioned communications terminal 1 under a condition of providing individual ID 2 in manufacturing process as mentioned above.

In the composition of Fig. 1, the personal information 4 of the contractor 5 is registered in the authentication server 3 in advance. The contractor 5 calls up the authentication server 3 when the contractor 5 wants to connect the communications terminal 1 to the authentication server 3. In response to the call, the authentication server 3 requires transmission of the ID 2 with respect to the communications terminal 1. The communications terminal 1 responds to the request from the authentication server 3 and sends the ID2 to the authentication server 3. The authentication server 3 compares the obtained ID2 to each of IDs registered in the authentication server 3 to determine if there is a match. In the event there is a match, processes of the electronic shopping is executed using the personal information 4 corresponding to the matching ID2.

Thus, the security of the personal information can be ensured by performing the authentication using the individual ID2 set individually in the communications terminal 1, because there is no need to key-input the personal information from the communications terminal 1. Further, inputting the personal information is not required, which relieve the user of bothers.

### A second preferred embodiment

As it has been mentioned above, the present invention performs the authentication uniquely using the ID provided in each communications terminal 1. Accordingly the system possibly be abused by a third party in the event that the communications terminal 1 falls into other's hand by theft and the like. For this reason, an obligation of inputting a password is adopted in a second preferred embodiment. A password previously registered as one of the personal information is used here.

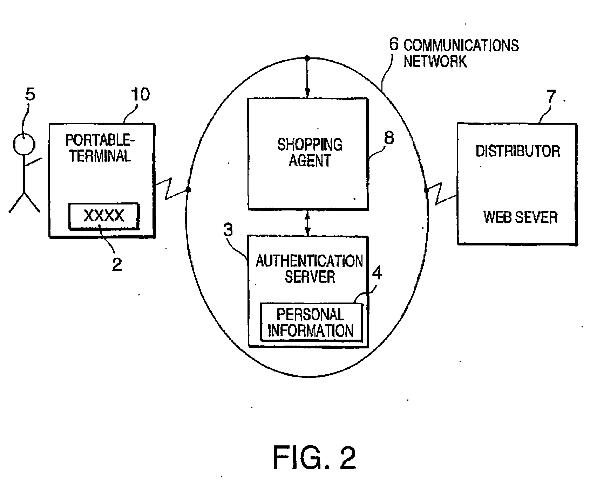

Fig. 2 illustrates an embodiment of the authentication system according to the present invention.

The present embodiment illustrates an example of a network system for performing the electronic shopping. Identical numerals quoted from Fig. 1 are put respectively on the portions having identical compositions and functions in Fig. 2. And a portable terminal 10 represented by a portable phone and a PHS is used as the communications terminal 1 shown in Fig. 1.

As mentioned above, the portable terminal 10 has the ID2 individually added inside of the communications terminal and is positioned as a terminal of a subscriber (contractor) in the communications network 6. A contractor of the communications service using the portable terminal 10 is indicated as the contactor 5. And a shopping agent (agent) 8 connected to the authentication server 3 and a Web server 7 provided in each distributor are connected to the communications network 6. The authentication server 3 stores the personal information (address, name, bank account number, credit information and the like) 4 for authentication and functions as a kind of database. The shopping agent 8 starts up in response to a requirement for the electronic shopping and provides a function for autonomously executing various processes associated with the electronic shopping based on knowledgebase contained therein.

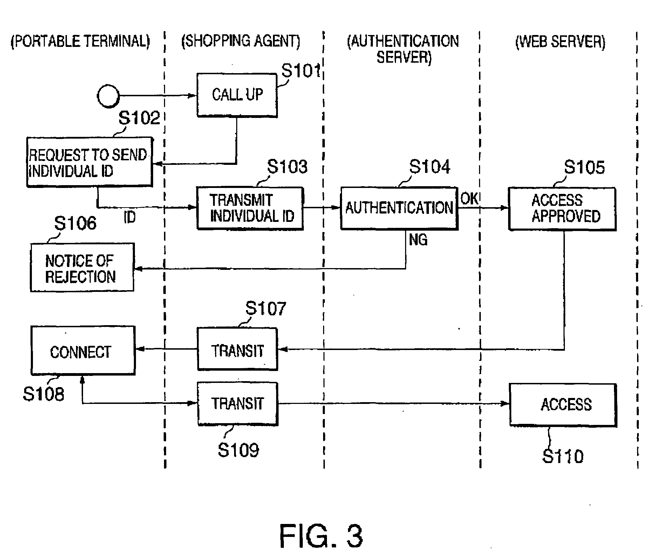

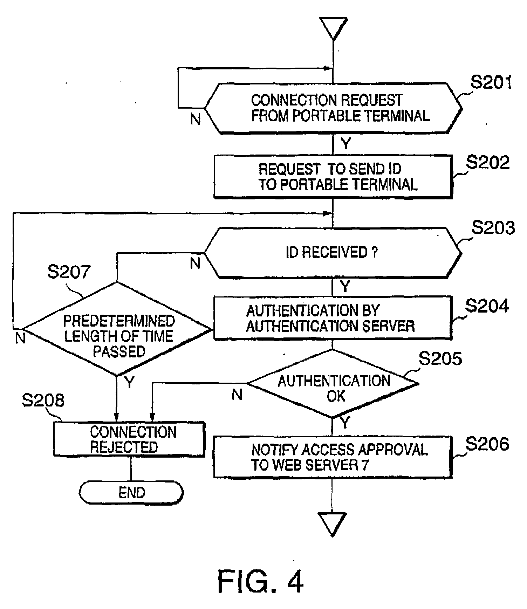

Fig. 3 illustrates an operation of the system shown in Fig. 2. And Fig. 4 illustrates processes in the shopping agent and the authentication server. Referring to Figs. 3 and 4, an operation of the composition shown in Fig. 2 is described. Hereinafter "S" indicates a step in the drawings.

In the event of performing electronic shopping, the contractor 5 makes an access to the shopping agent 8 via the communications network 6 using the portable terminal 10 (S101, S201). The shopping agent 8 sends a request for ID2 to the portable terminal 10 using JAVA applet (a program written in JAVA language and operates in a browser) in order to identify the portable terminal 10 (S102, S202). The portable terminal 10 transmits the ID 2 to the shopping agent 8 in response to the request (S103). After receiving the ID 2 (S203), the shopping agent 8 further transmits the ID 2 to the authentication server 3. The authentication server 3 authenticates the ID 2 in comparison with previously registered personal information 4 (S104, S204). In the event that the authentication is established (S205), the establishment of the authentication is notified to the Web server 7 (S105, S206).

In the event that the ID 2 is not transmitted in response to the request for transmission of ID 2 from the shopping agent 8 even after a predetermined length of time, and in the event that the authentication is not established, a process of rejecting the communications is executed (S106, S208).

When the authentication is established, the Web server 7 is connected with the portable terminal 10 (S108) via the communications network 6 and the shopping agent 8 (S107), and communications between the portable terminal 10 and the Web server 7 is executed (S109, S110). All the contractor 5 has to do is to follow the necessary procedure arranged with the Web server 7 so that the contractor 5 can purchase desirable products.

As it has been mentioned above, according to the embodiments of the present invention, key input of the personal information from the portable terminal 10 becomes unnecessary because of the authentication using individual ID 2 individually set in each portable terminal 10, and therefore, security of the personal information can be ensured. And there is no need to input personal information, thereby relieving bothers.

Further, not only a configuration wherein an ID is stored inside of the portable terminal 10 but also a composition wherein an IC card having ID2 stored therein is installed in the portable terminal 10 can be accepted as the aspects of the ID 2 of the portable terminal 10.

It has been described about the electronic shopping in the preferred embodiments mentioned above. However, the present invention is not limited to the electronic shopping and is further adoptable for all kinds of communications dealing with the personal information (Internet on-line sale, electronic business transaction and the like) using the Internet and telephone lines and the like available for un indefinite number of people.

As described above, according to the authentication system of the present invention wherein database is formed by IDs individually added to terminals and personal information on the server side, the server requests the terminal for transmitting the ID when a user makes an access from the terminal and authentication is performed based on a result of verifying the ID, thereby avoiding input operation for authentication by the user. Accordingly, personal information can be protected from being revealed by a third party in result and security can be ensured. Additionally, users are not bothered by forced input operation. Further, there is no need to issue a temporary password, thereby reducing costs for security measures.

## Claims

1. An authentication system for determining the authenticity of a user on the occasion of providing said user with desirable services via a terminal connected to a communications circuit or a network, wherein an authentication server in which personal information for authentication is registered is connected to said communications circuit or said network, and said server makes a request to said terminal for an ID individually added to said terminal to be transmitted upon connection request from said terminal so that the authentication is performed according to the pass/fail result of verification of said transmitted ID.

2. An authentication system as claimed in claim 1, wherein said individual ID is set and stored in manufacturing process said terminal.

3. A system as claimed in claim 1 or 2, wherein
said terminal represents a portable phone, a simplified portable phone (PHS), a PDA (Personal Digital Assistant) terminal, or a set top box.

4. A system as claimed in claim 1, 2 or 3, wherein
said individual ID is provided in an IC card removable from said terminal.

5. A system as claimed in claim 1, 2, 3 or 4, wherein
an input of a password from said terminal is one of conditions of authentication performed by said authentication server.

6. A system as claimed in claim 1, 2, 3, 4 or 5, wherein
said authentication server is connected to an agent taking charge of processes of receiving an access from said terminal, requesting said terminal to transmit said individual ID, and communicating with a Web server.

7. An authentication system as claimed in claim 6, wherein
said agent is a shopping agent for executing electronic shopping and said Web server is provided in distributors.
